(19) Europäisches Patentamt
European Patent Office
Office européen des brevets

(11) Publication number: **0 107 213**
**B1**

(12) # EUROPEAN PATENT SPECIFICATION

(45) Date of publication of patent specification: **28.05.86**

(51) Int. Cl.[4]: **B 01 D 53/34,** C 01 B 17/05

(21) Application number: **83201256.1**

(22) Date of filing: **31.08.83**

(54) **H2S removal.**

(30) Priority: **30.09.82 US 430462**
**30.09.82 US 430532**
**30.09.82 US 430467**
**30.09.82 US 430466**
**30.09.82 US 430465**
**30.09.82 US 429958**

(43) Date of publication of application:
**02.05.84 Bulletin 84/18**

(45) Publication of the grant of the patent:
**28.05.86 Bulletin 86/22**

(84) Designated Contracting States:
**BE DE FR GB IT NL**

(56) References cited:
**US-A-3 068 065**
**US-A-3 765 946**
**US-A-4 009 251**
**US-A-4 038 366**
**US-A-4 126 529**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Olson, Donald Craig**
**12014 Paradise Valley Drive**
**Houston Texas 77066 (US)**

(74) Representative: **Aalbers, Onno et al**
**P.O. Box 302**
**NL-2501 CH The Hague (NL)**

**EP 0 107 213 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a process for the removal of $H_2S$ from a sour gaseous stream.

The presence of significant quantities of $H_2S$ and $CO_2$ in various "sour" industrial gaseous streams poses a persistent problem. A gaseous stream is named "sour" if it contains significant quantities of $H_2S$ and/or $CO_2$.

Although various procedures have been developed to remove and recover these contaminants, most such processes are deficient, for a variety of reasons.

In one cyclic method currently attracting attention (See EP—A—0055497), the sour gaseous stream is contacted, preferably with a solvent-reactant system which contains a regenerable reactant, to produce solid elemental sulphur which is recovered either prior or subsequent to regeneration. Suitable reactant materials include polyvalent ions of metals, such as iron, vanadium, copper, manganese, and nickel, and include polyvalent metal chelates. Preferred reactants are coordination complexes in which iron forms chelates with specified organic ligands.

In yet another process, e.g., that disclosed in U.S. Patent Specification 4,091,073 $CO_2$ present in the gaseous stream is also removed by the use of a suitable selective absorbent.

Because these "cleanup" processes generally represent significant costs to manufacturing operations, any improvements in such processes which increase their efficiency may have great economic importance. For example, where ligands or chelates of polyvalent metals are employed, chemical degradation or decomposition of the ligand represents an important cost in the process, as well as requiring measures for decomposition bleed or removal and addition of fresh solution. Even in the case of the iron chelate of N - (2 - hydroxyethyl)ethylenediaminetriacetic acid, ligand decomposition, over a period of time, requires attention to prevent build-up of decomposition products and consequent loss of efficiency.

Evidence exists that degradation of the ligand in such processes may be caused by or enhanced by regeneration of the reduced form of the chelated metal-ion with oxygen or an oxygen-containing gas. The invention avoids this problem, and regenerates the ligand in a novel and efficient manner.

Accordingly, the invention relates to a process for the removal of $H_2S$ from a sour gaseous stream, which process comprises the following steps:—

a) contacting the sour gaseous stream in a contacting zone with an aqueous reaction solution at a temperature below the melting point of sulphur, the solution containing an oxidizing reactant comprising one or more oxidizing polyvalent metal chelate compounds and producing a sweet gaseous stream and an aqueous reaction solution containing crystalline sulphur and reduced polyvalent metal chelate or chelates;

b) regenerating the reduced polyvalent metal chelate or chelates, characterised in that the regeneration is carried out in an electrochemical cell comprising an anode section containing an anode and a separate cathode section containing a cathode connected to the anode, the anode section and the cathode section being separated by a hydrogen ion permeable barrier, said regeneration being carried out by oxidizing the reduced polyvalent metal chelate or chelates of said acid in the aqueous reaction solution at the anode by allowing hydrogen ions to migrate to the cathode section, and by

b1) using a cathode connected through an external electrical connection to the anode, supplying direct current to said cell and concomitantly supplying oxygen to the cathode and forming water at the cathode, or

b2) using a cathode connected through an external load to the anode, producing direct current through said load and concomitantly supplying oxygen to the cathode section and forming water at the cathode, or

b3) using a cathode connected through an external electrical connection to the anode, supplying direct current to said cell and producing hydrogen at the cathode, and

c) removing sulphur from the aqueous reaction solution and, in case of b1) and b2) water, and in case of b3) hydrogen from the cathode section.

In one embodiment, the regeneration may be carried out directly in the contacting zone, the anode section of the electrochemical cell being present in the contacting zone.

In a preferred embodiment, an aqueous admixture containing sulphur and reduced reactant is removed from the contacting zone and electrolytically regenerated, as herein specified, in a separate zone. In this preferred embodiment, aqueous admixture containing reduced polyvalent metal chelate or chelates is withdrawn from the contacting zone of step (a), withdrawn aqueous admixture is electrolytically regenerated by passing the aqueous admixture through the anode section of the electrochemical cell of step (b) and regenerated aqueous mixture is removed from the anode section and returned to the contacting zone. At least a portion of the sulphur crystals may be removed before regenerating the reduced reactant, or at least a portion of the sulphur crystals may be removed after regeneration. Preferably, the sulphur is removed before regeneration of the reactant.

In another embodiment of the invention, a sour gaseous stream containing $H_2S$ and $CO_2$ is contacted with a selective absorbent-aqueous reactant mixture at a temperature below the melting point of sulphur, the reactant mixture and procedure being similar to that described, above. This is accomplished by the use of an absorbent mixture containing a liquid absorbent selective

for $CO_2$ (and preferably for $H_2S$, as well), and an effective amount of an oxidizing polyvalent metal chelate compound (as specified herein), and mixtures thereof. A purified or "sweet" gaseous stream is produced which meets general industrial and commercial $H_2S$ and $CO_2$ specifications. The $CO_2$ is absorbed and the $H_2S$ is immediately converted to sulphur by the oxidizing polyvalent metal chelate of the said acid. In the process, the oxidizing reactant is reduced, and sulphur may be treated, as described above. The sulphur crystals may be removed prior or subsequent to electrolytic regeneration of the admixture.

The invention also provides, in this embodiment, for the regeneration of the reactant and the absorbent. The loaded absorbent mixture containing the reduced polyvalent metal chelate compound, or mixtures thereof, is regenerated in an electrolytic regeneration zone or zones, as described. The reactant-containing solution is treated prior or subsequent to such electrolytic regeneration, as by heating or pressure reduction, to remove the $CO_2$ (either prior or subsequent to sulphur removal).

As indicated, a key feature of the invention lies in the manner in which the regeneration of the reduced reactant is carried out. In the first embodiment mentioned, a suitable electrode or electrodes are maintained in the solution or admixture in the contacting zone, preferably at some finite distance from the site of the introduction of the $H_2S$, and direct current, such as from a potentiostat, is supplied to maintain such electrode(s) as an anode, a separate half cell containing a suitable cathode or cathodes being also provided. Alternatively, an external electrical connection is provided, through a load, to another electrode or electrodes separate from the contacting zone. Oxygen is provided to the second electrode or electrodes, and the regeneration "cell" is operated as a fuel cell, the regeneration being carried out in a fuel cell mode. Alternatively to the oxygen supply and water formation, if direct current is supplied to said cell, concomitantly hydrogen is produced at the cathode. The $H_2S$ removal and regeneration of the reduced chelate may be carried out continuously.

Preferably, however, solution or admixture containing reduced reactant is removed from the contact zone, sulphur is removed, and the reduced reactant is oxidized by passing the solution or admixture through the anode section of an electrochemical cell supplied from a direct current source of potential, the anode removing electrons from the reduced polyvalent metal chelate or chelates and converting the reduced polyvalent metal chelate or chelates to the oxidized polyvalent metal chelate(s). The other half of the cell is used to receive $H^+$ ions, electrons, and oxygen, and produce water, or, alternatively, to produce hydrogen. A similar procedure may be employed if a selective absorbent-aqueous reactant mixture is employed. The process, including the regeneration, is preferably carried out continuously, and the cells may be employed in series.

A variety of half cells may be used in the practice of the invention and the precise construction of the cell is a matter of choice. The anode and cathode sections will be separated by a suitable barrier to prevent reduction of the oxidized polyvalent metal chelate, etc., the barrier, however, allowing or permitting hydrogen ion transport. Suitable barriers may be selected by those skilled in the art, and include porous or fibrous non-conductive inert materials containing or impregnated with the desired electrolyte. For example, asbestos cloth and microporous polyvinyl chloride may be employed. However, polymeric ion exchange membranes, which also function as electrolytes, may be used to separate the electrodes. For example, Nafion®, a perfluorinated carbon polymer with pendant sulphonic groups, as described in IECEC '75 (Intersociety Energy Conversion Engineering Conference) Record, pages 210 through 216, is suitable. Suitable electrodes include, e.g., platinum or carbon. The cathodic half cell may be of any suitable type for reacting $H^+$ ions with oxygen and electrons to produce water. The hydrogen producing half cell may be as varied, as for example, a carbon electrode in $H_2SO_4$, phosphoric acid, or other acidic electrolytes, or an ion exchange electrolyte such as Nafion with platinum or other suitable electrode material deposited thereon. The reaction may be shown, in the case of iron, for example, as follows:

Anode 2Fe(II) chelate$\rightarrow$2Fe(III) chelate+2e
Cathode $2H^+ + 2E \rightarrow H_2$

This overall cell reaction has a free energy near zero. Accordingly the cell will probably in practice require power for the regeneration, as described herein. Protons, of course, are provided in the system by the reaction of the $H_2S$ with the Fe(III) chelate, as shown by the following reaction equation:

$H_2S$+2Fe(III) chelate$\rightarrow$2Fe(II) chelate+S+$2H^+$

A preferred half cell which may be coupled with the oxidation half cell is one utilizing an oxygen or the so-called air cathode. In such case, the hydrogen ions migrating to the cathode will react with the oxygen and electrons to produce water, and provision will be made for water removal. The reactions may be shown, in the case of iron, for example, as follows:

Anode 4Fe(II) chelate$\rightarrow$4Fe(III) chelate+4e
Cathode $4H^+ + O_2 + 4e \rightarrow 2H_2O$

This overall cell reaction has a negative free energy. Assuming that an adequate current density, for example, from about 0.1 to about 0.2 amperes/$cm^2$ of electrode surface, can be achieved without excessive overpotentials, the

cell provides useful work through the load. Assuming the current densities mentioned, the electromotive force (emf) generated will be of sufficient value to be usefully employed. Nonetheless, if overpotentials are excessive the cell will require power for the regeneration, as described herein. Where overpotentials are lower than the redox potential of the overall electrochemical cell reaction, the cell may be utilized to generate useful voltage, as described herein. In any case, oxygen or air cathodes are known, as for example, that described in U.S. Patent Specification 3,765,946, or as described in the Proceedings of the 27th Power Sources Symposium (1976) by P.S.C. Publications, pages 175 through 177. Suitable electrodes include, as noted, those of platinum or platinized porous carbon. As used herein, the term oxygen includes oxygen-containing gases, such as air or air enriched with oxygen, or pure oxygen.

The particular type of gaseous stream treated is not critical, as will be evident to those skilled in the art. Streams particularly suited to removal of $H_2S$ and $CO_2$ by the practice of the invention are, as indicated, naturally-occurring gases, synthesis gases, process gases, and fuel gases produced by gasification procedures, e.g., gases produced by the gasification of coal, petroleum, shale, tar sands, etc. Particularly preferred are coal gasification streams, natural gas streams and refinery feedstocks composed of gaseous hydrocarbon streams, especially those streams of this type having a low ratio of $H_2S$ to $CO_2$, and other gaseous hydrocarbon streams. The term "hydrocarbon stream(s)", as employed herein, is intended to include streams containing significant quantities of hydrocarbon (both paraffinic and aromatic), it being recognized that such streams contain significant "impurities" not technically defined as a hydrocarbon. Again, streams containing principally a single hydrocarbon, e.g., ethane, are eminently suited to the practice of the invention. Streams derived from the gasification and/or partial oxidation of gaseous or liquid hydrocarbon may be treated by the invention. The $H_2S$ content of the type of streams contemplated will vary extensively, but, in general, will range from about 0.1 per cent to about 10 per cent by volume. $CO_2$ content may also vary, but may range from about 0.1 per cent to about 99 percent or greater by volume. Obviously, the amounts of $H_2S$ and $CO_2$ present are not generally a limiting factor in the practice of the invention.

The temperatures employed in the contacting or absorption-contact zone are not generally critical, except that the reaction is carried out below the melting point of sulphur, and, if an absorbent is used, the temperatures employed must permit acceptable absorption of $CO_2$. In many commercial applications, such as the removal of $H_2S$ and $CO_2$ from natural gas to meet pipeline specifications, absorption at ambient temperatures is desired, since the cost of refrigeration would exceed the benefits obtained due to increased absorption at the lower temperature. In general, temperatures from 10°C to 80°C are suitable, and temperatures from 20°C to 45°C are preferred. Contact times will range from about 1 s to about 270 s or longer, with contact times of 2 s to 120 s being preferred.

In the regeneration zone or zones, temperatures may be varied widely. Preferably, the regeneration zone should be maintained at substantially the same temperature as the contacting zone. In general, temperatures of from about 10°C to 80°C, preferably 20°C to 45°C, may be employed.

Pressure conditions in the contacting zone may vary widely. If the regeneration is carried out in the contacting zone, the pressure may vary up to the limitations of the electrolytic half cell. If the regeneration is carried out in a separate zone, pressures in the contacting zone may vary from one bar up to 152 or even 203 bar, with pressures of from one bar to about 101 bar being preferred. In the regeneration or desorption zone or zones, pressures also may be varied considerably, and will preferably range from about 0.5 bar to about three or four bar. The pressure-temperature relationships involved are well understood by those skilled in the art, and need not be detailed herein. Other conditions of operation for this type of reaction process, e.g., pH, etc., are further described in U.S. Patent Specification 3,068,065 and U.S. Patent Specification 4,009,251. Preferably, pH in the process of the invention will be in the acid region, i.e., less than 7.

As indicated, the $H_2S$, when contacted, is rapidly converted in the process of the invention by the oxidizing polyvalent chelate, or mixtures thereof, to elemental sulphur. Since the polyvalent metal chelates have limited solubility in many solvents or absorbents, if an absorbent is used, the polyvalent metal chelates are preferably supplied in admixture with the liquid absorbent and water. The amount of oxidizing polyvalent metal chelate, or mixtures thereof, supplied is an effective amount, i.e., an amount sufficient to convert all or substantially all of the $H_2S$ in the gas stream, and will generally be on the order of at least about two mol (basis polyvalent metal) per mol of $H_2S$ converted. Ratios of from about 2 mol to about 15 mol of polyvalent metal chelate (or chelates) per mol of $H_2S$ may be used, with ratios of from about 2 mol per mol to about 5 mol of polyvalent metal chelate per mol of $H_2S$ being preferred. The manner of preparing the admixture containing an absorbent is a matter of choice. For example, the polyvalent metal chelate or chelates may be added to the absorbent, and, if necessary, then water added. The amount of water added is not critical but must be sufficient to achieve solution of the chelate or chelates, and can be determined by routine experimentation. Since the polyvalent metal chelate may have a significant solubility in the solvent, and since water is produced by the reaction of the $H_2S$ and the polyvalent metal of the chelate, precise amounts of water to be added cannot be given. In the case of absorbents having a low solubility for the chelate, approximately 5 per cent to 10 per cent

water by volume, based on the total volume of the absorbent mixture, will generally provide solvency. Preferably, however, the chelate or chelates are added as an aqueous solution to the liquid absorbent. Where the reactant is supplied as an aqueous solution, the amount of solution supplied may be about 20 percent to about 80 per cent by volume of the total absorbent admixture supplied to the absorption zone. A polyvalent metal chelate solution will generally be supplied as an aqueous solution having a concentration of from about 0.1 molar to about 1 molar, and a concentration of about 1.0 molar is preferred. The ligand to metal molar ratio may range from 1.0 to 2.0, for example from 1.1 to 2.0 for metal chelates of nitrilotriacetic acid and preferably 1.2 to 1.4.

Any oxidizing polyvalent metal, or mixtures thereof, for the chelate compound may be used, but iron, copper and manganese are preferred, particularly iron. The polyvalent metal should be capable of oxidizing hydrogen sulphide, while being reduced itself from a higher to a lower valence state, and should then be oxidizable from the lower valence state to the higher valence state in a typical redox reaction. Other polyvalent metals which may be used include lead, mercury, palladium, platinum, tungsten, nickel, chromium, cobalt, vanadium, titanium, tantalum, zirconium, molybdenum, and tin.

Preferred reactant materials are coordination complexes in which polyvalent metals form chelates with a ligand having the formula

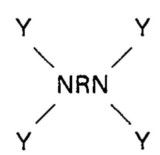

wherein:

- from two to four of the groups Y represent carboxymethyl or 2-carboxyethyl groups;
- from zero to two of the groups Y represent a 2-hydroxyethyl or 2-hydroxypropyl group or a group having the general formula

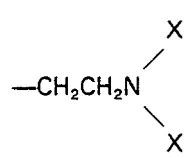

wherein X represents a carboxymethyl or 2-carboxyethyl group and
- R represents an ethylene, propylene, isopropylene, 1,2-cyclohexylene or 1,2-benzylene group.

Mixtures of such coordination complexes may be used.

The polyvalent metal chelates are readily formed in aqueous solution by reaction of an appropriate salt, oxide or hydroxide of the metal and the chelating agent in the acid form or an alkali metal or ammonium salt thereof. Exemplary chelating agents include aminoacetic acids derived from ethylenediamine, diethylenetriamine, 1,2-propylenediamine, and 1,3-propylenediamine, such as EDTA (ethylenediaminetetraacetic acid), HEDTA (N - (2 - hydroxyethyl)-ethylenediaminetriacetic acid), DETPA (diethylenetriaminepentaacetic acid); aminoacetic acid derivatives of cyclic 1,2-diamines, such as 1,2 - diaminocyclohexane - N,N - tetraacetic acid, and 1,2 - phenylenediamine - N,N - tetraacetic acid, and the amides of polyaminoacetic acids disclosed in U.S. Patent Specification No. 3,580,950. The ferric chelate of N - (2 - hydroxyethyl)ethylenediaminetriacetic acid is preferred. According to another preferred embodiment of the invention the reactant is a polyvalent metal chelate of nitrilotriacetic acid, particularly a coordination complex of iron with nitrilotriacetic acid.

The absorbents which may additionally be employed in this invention are those absorbents which have a high degree of selectivity in absorbing $CO_2$ (and preferably $H_2S$ as well) from the gaseous streams. Any of the known absorbents conventionally used which do not affect the activity of the polyvalent chelate, or mixtures thereof, and which exhibit sufficient solubility for the reactant or reactants may be employed. As indicated, the absorbent preferably has good absorbency for $H_2S$ as well, in order to assist in the removal of any $H_2S$ present in the gaseous streams. The particular absorbent chosen is a matter of choice, given these qualifications, and selection can be made by routine experimentation. For example, 3,6-dioxaoctanol (also referred to as "Carbitol"® or "diethylene glycol monoethyl ether"), propylene carbonate, 2,5,8,11,14-pentaoxapentadecane (also referred to as "tetraethylene glycol dimethyl ether"), N-methylpyrrolidone, tetrahydrothiophene 1,1-dioxide (also referred to as "sulfolane"), methyl isobutyl ketone, 2,4-pentanedione, 2,5-hexanedione, 2 - hydroxy - 2 - methyl - 4 - pentanone (also referred to as "diacetone alcohol"), hexyl acetate, cyclohexanone, 4 - methyl - 3 - penten - 2 - one (also referred to as "mesityl oxide"), and 4 - methyl - 4 - methoxy - pentanone - 2 may be used. Suitable temperature and pressure relationships for different $CO_2$-selective absorbents are known, or can be calculated by those skilled in the art.

The manner of recovering the sulphur is a matter of choice. For example, the sulphur may be recovered by settling, filtration, liquid extraction or flotation, or by suitable devices, such as a hydrocyclone. Preferably, the sulphur is removed prior to regeneration.

In order to illustrate the invention, reference is made to the accompanying schematic drawing. Parameter values given herein are calculated or are merely exemplary, and should not be taken as delimiting the invention.

Figure 1 illustrates a combined $H_2S$ removal process-oxygen regeneration scheme.

Figure 2 illustrates a preferred $H_2S$ removal process-oxygen regeneration scheme.

Figure 3 illustrates a preferred electrode system.

Figure 4 illustrates a combined sulphur removal-regeneration scheme producing hydrogen.

Figure 5 illustrates a preferred $H_2S$ removal process-regeneration system producing hydrogen.

Figure 6 illustrates a preferred electrode system suitable for producing hydrogen.

The elements in Figures 1, 2, 3, 4, 5 and 6 denoted with the same reference number have the same functions.

In Figure 1, sour natural gas containing, for example, 0.5 per cent by weight of $H_2S$, based on the total weight of the gas, from a line 1 enters a contactor 2 via a sparger 3. The gas, preferably as fine bubbles, is contacted in contactor 2 with a 1.0 M solution of the ferric chelate of N - (2 - hydroxyethyl)ethylenediaminetriacetic acid. The $H_2S$ is immediately converted to sulphur and $H^+$ ions, and ferric chelate of N - (2 - hydroxyethyl)-ethylenediaminetriacetic acid is immediately converted to ferrous chelate of N - (2 - hydroxyethyl)ethylenediaminetriacetic acid. "Sweetened" natural gas leaves contactor 2 via a line or outlet 4 to use for further treatment. Contactor 2 also contains a platinum anode 5, which is connected electrically through a potential source or, alternatively, a load 6 to a cathode 7. Cathode 7 is an air cathode mounted opposite an opening in the wall of contactor 2 in such manner that it is contact with a hydrogen ion permeable membrane 8 which covers the opening. The membrane 8 preferably comprises a substance, such as Nafion, and the cathode, which may simply be a porous carbon coating on the membrane, preferably contains platinum particles. Adjoining contactor 2 is a chamber 9 into which an oxygen-containing gas, such as air, is conducted via a line 10 and through which chamber this gas is passed in contact with the electrode. Spent air is withdrawn from chamber 9 via a line 11.

As the reduced chelate is formed in solution, it is promptly oxidized at anode 5 by virtue of the difference in potential, for example 2 volts, being placed across the cell, in case 6 represents a potential source. Concomitantly, hydrogen ions migrate through the membrane 8 to the porous carbon cathode 7 and react there with oxygen and electrons to form water. The water is removed via an outlet 12. The procedure is preferably conducted continuously, sulphur-containing reactant solution being removed from the bottom of contactor 2 via a line 13 and a pump 14 and passed via a line 15 to a filter 16 where sulphur is removed via a line 17. Other sulphur removal techniques may be employed. After sulphur removal, the solution is returned via a line 18 to contactor 2. In theory, a useful voltage of 0.5 to 1 volt may be delivered, in case 6 represents a load.

In Figure 2, sour gas, e.g., natural gas containing about 0.5 per cent by weight of $H_2S$, in a line 1 enters a contactor or column 2 (tray type) into which also enters an aqueous admixture comprising an aqueous 1.0 M solution of the Fe(III) chelate of N - (2-hydroxyethyl)ethylenediaminetriacetic acid from a line 20. The pressure of the feed gas is about 83.75 bar and the temperature of the aqueous admixture is about 45°C. A contact time of about 120 s is employed in order to react all the $H_2S$. Purified or "sweet" gas leaves column 2 through line 4. The "sweet" gas is of a purity sufficient to meet standard requirements. In the admixture, the $H_2S$ is converted to elemental sulphur by the Fe(III) chelate, the Fe(III) chelate in the process being converted to the Fe(II) chelate. The aqueous admixture, containing the elemental sulphur, is removed continuously and sent through a line 21 to a depressurization and degassing unit 22, and then to a separation zone 23. The separation zone 23 preferably comprises a unit, such as a filter, liquid extraction unit, or centrifuge, for separating the bulk of the sulphur produced from the aqueous admixture. It is not necessary that all sulphur be removed from the admixture. Sulphur is removed via line 17, and may further treated, as desired. Concomitantly, the aqueous admixture is removed via a line 24 for regeneration of the chelate. If the aqueous admixture contains a solvent for $CO_2$, according to that embodiment of the invention, it may suitably be stripped at this point, or after regeneration in a stripper 25 (shown in dotted lines). If steam is used, the solution must be cooled before re-use.

To regenerate, the admixture in line 24 enters the anode section A of a cell 26 (direct current supplied by potentiostat 6) where reduced reactant, i.e., the Fe(II) chelate of N - (2 - hydroxyethyl)ethylenediaminetriacetic acid, is oxidized at a carbon or other suitable electrode to the Fe(III) chelate of N - (2 - hydroxyethyl)-ethylenediaminetriacetic acid. A potential of 2.0 volts is utilized. Regenerated reactant mixture leaves section A via line 27, preferably to a holding tank 28, from whence it may be returned via line 20 to contactor 2. Make-up reactant solution is supplied to holding tank 28 via a line 29. Section A is separated from cathode section C by a hydrogen ion permeable barrier B, preferably Nafion. Section C receives $H^+$ ion from section A, and air from line 10 to produce water, as shown. Alternatively, reference numeral 6 indicates a load. In this case, the connection of the half cells, externally as shown, may be used to produce a useful current flow. Those skilled in the art will recognize that this description of cell 26 is merely illustrative, and that a multiple cell unit should, in fact, be employed. Such a cell stack is shown in Figure 3.

More particularly, Figure 3 illustrates a cell stack section which may be used in the invention. Each cell has a Nafion ionic membrane 8 coated on both sides with porous carbon containing a small amount of platinum or other catalyst. The porous carbon, with the catalyst, serves as the

electrodes and the Nafion membrane allows hydrogen ions to migrate to the cathode 7. The reduced admixture is passed via line 24 through the anode cell space containing anode 5 and air is passed via line 10 through the cathode cell space. Regenerated reactant mixture leaves the anode cell space via line 27 and spent air is withdrawn from the cell stack section via line 11.

In order to determine the suitability of the Fe(III)-Fe(II) half cell, the following two examples were carried out. Current density measurements were made utilizing a 2.5 $cm^2$ platinum anode and ferric chelate of nitrilotriacetic acid was employed at concentrations of 1 and 2 weight per cent, basis Fe, respectively. At a voltage drop of 0.5V, a current density of 250 $ma/cm^2$ was obtained with the 2 wt per cent solution, and a current density of 150 $ma/cm^2$ was obtained with the 1 wt per cent Fe solution. Based on these tests, it was concluded that the couple was suitable for electrochemical cell regeneration and for fuel cell operation.

In Fig. 4, the platinum anode 5 is connected electrically through potentiostat 6 to cathode 7. Cathode 7 is mounted opposite an opening in the wall of contactor 2 in chamber 9 which contains 0.1 to 1.0 M $H_2SO_4$ in such a manner that it is in contact with hydrogen ion permeable membrane 8 which covers the opening. Hydrogen ions migrate through the membrane 8 to the porous carbon cathode, receive electrons there, and form molecular hydrogen. The hydrogen gas is removed via an outlet 30. Fresh electrolyte is supplied to chamber 9 via a line 31 and spent electrolyte is withdrawn from chamber 9 via line 32.

In Figure 5, section C receives $H^+$ ion from section A, and hydrogen is removed overhead via line 30.

Figure 6 illustrates schematically a cell which may be used to produce hydrogen in the regeneration step of the invention. The aqueous admixture enters the anode section A through line 24. The cell has a potential of 2 to 3 volts across the electrodes. In anode section A, the reduced iron(II) chelate of N - (2 - hydroxyethyl)-ethylenediaminetriacetic acid is oxidized at the anode to the Fe(III) chelate. Regenerated aqueous reactant solution leaves section A through line 27 and may be returned to the contact zone for further $H_2S$ removal. Concomitantly, $H_2$ is produced in cathode section C at a platinum electrode, and is removed through line 30. The solution in this half cell is a 0.1 to 1 M solution of $H_2SO_4$, and this solution is separated from section A by a hydrogen ion permeable barrier at B.

While the invention has been illustrated with particular apparatus, those skilled in the art will appreciate that, except where specified, other equivalent or analogous units may be employed. The term "zones", as employed in the specification and claims, includes, where suitable, the use of segmented equipment operated in series, or the division of one unit into multiple units because of size constraints, etc. For example, a contacting column might comprise two separate columns in which the solution from the lower portion of the first column would be introduced into the upper portion of the second column, the gaseous material from the upper portion of the first column being fed into the lower portion of the second column. Parallel operation of units, is of course, well within the scope of the invention.

## Claims

1. A process for the removal of $H_2S$ from a sour gaseous stream, which process comprises the following steps:—

a) contacting the sour gaseous stream in a contacting zone with the an aqueous reaction solution at a temperature below the melting point of sulphur, the solution containing an oxidizing reactant comprising one or more oxidizing polyvalent metal chelate compounds and producing a sweet gaseous stream and an aqueous reaction solution containing crystalline sulphur and reduced polyvalent metal chelate or chelates;

b) regenerating the reduced polyvalent metal chelate or chelates, characterised in that the regeneration is carried out in an electrochemical cell comprising an anode section containing an anode and a separate cathode section containing a cathode connected to the anode, the anode section and the cathode section being separated by a hydrogen ion permeable barrier, said regeneration being carried out by oxidizing the reduced polyvalent metal chelate or chelates of said acid in the aqueous reaction solution at the anode by allowing hydrogen ions to migrate to the cathode section, and by

- b1) using a cathode connected through an external electrical connection to the anode, supplying direct current to said cell and concomitantly supplying oxygen to the cathode and forming water at the cathode, or
- b2) using a cathode connected through an external load to the anode, producing direct current through said load and concomitantly supplying oxygen to the cathode section and forming water at the cathode, or
- b3) using a cathode connected through an external electrical connection to the anode, supplying direct current to said cell and producing hydrogen at the cathode, and

c) removing sulphur from the aqueous reaction solution and, in case of b1) and b2) water, and, in case of b3) hydrogen from the cathode section.

2. A process as claimed in claim 1, in which the said contacting zone comprises the said anode section.

3. A process as claimed in claim 1, in which aqueous admixture containing reduced polyvalent metal chelate or chelates is withdrawn from the contacting zone of step (a), withdrawn aqueous admixture is electrolytically regenerated by passing the aqueous admixture through the anode section of the electrochemical cell of step

(b) and regenerated aqueous admixture is removed from the anode section and returned to the contacting zone.

4. A process as claimed in claim 3, in which sulphur is removed from the aqueous admixture prior to the electrolytic regeneration thereof.

5. A process as claimed in any one of the preceding claims, in which the oxidizing reactant comprises one or more oxidizing polyvalent metal chelates of an acid having the formula

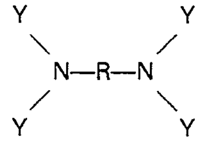

wherein:

— from two to four of the groups Y represent carboxymethyl or 2-carboxyl groups;

— from zero to two of the groups Y represent a 2-hydroxyethyl or 2-hydroxpropyl group or a group having the general formula

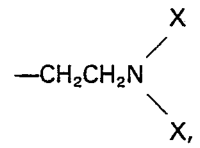

wherein X represents a carboxymethyl or 2-carboxyethyl group and

— R represents an ethylene, propylene, isopropylene, 1,2-cyclohexylene or 1,2-benzylene group.

6. A process as claimed in claim 5, in which the reactant is a polyvalent metal chelate of an aminoacetic acid derived from ethylenediamine.

7. A process as claimed in any one of the preceding claims, in which the polyvalent metal is iron.

8. A process as claimed in claim 7, in which the reactant is a coordination complex of iron with N - (2 - hydroxyethyl)ethylenediaminetriacetic acid.

9. A process as claimed in any one of claims 1 to 4, in which the reactant is a polyvalent metal chelate of nitrilotriacetic acid.

10. A process as claimed in claim 9, in which the reactant is a coordination complex of iron with nitrilotriacetic acid.

11. A process as claimed in any one of the preceding claims, in which the aqueous reaction solution also contains a liquid absorbent selective for $CO_2$.

**Patentansprüche**

1. Ein Verfahren zur Abtrennung von $H_2S$ aus einem sauren Gasstrom, welches Verfahren die folgenden Stufen umfaßt:

a) Kontaktieren des sauren Gasstroms in einer Kontaktierungszone mit einer wäßrigen Reaktionslösung bei einer Temperatur unterhalb des Schmelzpunktes von Schwefel, wobei die Lösung ein oxidierend wirkendes Reaktionsmittel enthält, welches ein oder mehrere oxidierend wirkende Chelatverbindung(en) eines mehrwertigen Metalls umfaßt, un Erzeugen eine gesüßten Gasstroms sowie einer wäßrigen Reaktionslösung, welche kristallinen Schwefel und reduzierte(s) Chelat oder Chelate des mehrwertigen Metalls enthält;

b) Regenerieren des (der) reduzierten Chelates oder Chelate des mehrwertigen Metalls, dadurch gekennzeichnet, daß die Regenerierungsbehandlung in einer elektrochemischen Zelle durchgeführt wird, welche einen eine Anode enthaltenden Anodenabschnitt und einen getrennten eine Kathode enthaltenden Kathodenabschnitt umfaßt, wobei die Kathode mit der Anode in Verbindung steht, der Anodenabschnitt und der Kathodenabschnitt durch eine für ein Wasserstoffion permeable Trennwand voneinander getrennt sind und die Regenierung durchgeführt wird, indem man das (die) reduzierte (n) Chelat oder Chelate des mehrwertigen Metalls besagter Säure in der wäßrigen Reaktionslösung an der Anode oxidiert, indem man Wasserstoffionen in den Kathodenabschnitt wandern läßt und indem man

b1) eine Kathode verwendet, welche durch eine äußere elektrische Verbindung mit der Anode in Verbindung steht, dabei Gleichstrom in die Zelle einspeist und gleichzeitig der Kathode Sauerstoff zuführt und dadurch an der Kathode Wasser erzeugt oder

b2) eine Kathode verwendet, welche über eine äußere Ladeeinheit mit der Anode in Verbindung steht, mittels dieser Ladeeinheit Gleichstrom erzeugt und gleichzeitig dem Kathodenabschnitt Sauerstoff zuführt und so an der Kathode Wasser bildet oder

b3) eine Kathode verwendet, welche über eine äußere elektrische Verbindung mit der Anode in Verbindung steht, der Zelle Gleichstrom zuführt und gleichzeitig an der Kathode Wasserstoff erzeugt und

c) den gebildeten Schwefel aus der wäßrigen Reaktionslösung abtrennt sowie im Fall der Ausführungsform b1) und b2) Wasser und im Fall von b3) Wasserstoff aus dem Kathodenabschnitt abführt.

2. Ein Verfahren wie in Anspruch 1 beansprucht, in welchem die besagte Kontaktierungszone den Anodenabschnitt umfaßt.

Ein Verfahren wie in Anspruch 1 beansprucht, in welchem man die reduzierte(s) Chelat oder Chelate des mehrwertigen Metalls enthaltende wäßrige Mischung aus der Kontaktierungszone von Stufe (a) abzieht, die abgezogene wäßrige Mischung elektrolytisch regeneriert, indem man die wäßrige Mischung durch den Anodenabschnitt der elektrochemischen Zelle gemäß Stufe (b) hindurch leitet und die regenerierte wäßrige Mischung aus dem Anodenabschnitt abzeiht und in die Kontaktierungszone zurückleitet.

4. Ein Verfahren wie in Anspruch 3 beansprucht, in welchem der Schwefel vor der elektrolytischen Regenerierung aus der wäßrigen Mischung abgetrennt wird.

5. Ein Verfahren wie in irgendeinem der vorhergehenden Ansprüche beansprucht, in welchem das oxidieren wirkende Reaktionsmittel ein oder mehrere oxidierend wirkende von einem mehrweitigen Metall gebildete Chelate einer Säure der nachstehenden Formel umfaßt

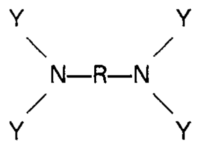

in welcher:

— zwei bis vier der Gruppen Y Carboxymethyl- oder 2-Carboxyäthylgruppen bedeuten;
— null bis zwei der Gruppen Y eine 2-Hydroxyäthyl- oder 2-Hydroxypropylgruppe oder eine Gruppe der nachstehenden allgemeinen Formel darstellen

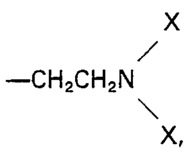

in welcher X eine Carboxymethyl- oder 2-Carboxyäthylgruppe darstellt und
— R eine Äthylen-, Propylen-, Isopropylen-, 1,2-Cyclohexylen- oder 1,2-Benzylengruppe darstellt.

6. Eine Verfahren wie Anspruch 5 beansprucht, in welchem das Reaktionsmittel ein Chelat eines mehrweritigen Metals einer Aminossigsäure ist, welche von Äthylendiamin ableitet.

7. Ein Verfahren wie in irgendeinem der vorhergehenden Ansprüche beansprucht, in welchem das mehrwertigen Metall Eisen ist.

8. Ein Verfahren wie in Anspruch 7 beansprucht, in welchem das Reaktionsmittel ein Koordinationskomplex von Eisen mit N - (2 - Hydroxyäthyl)äthyldiamintriessigsäure ist.

9. Ein Verfahren wie in irgendeinem der Ansprüche 1 bis 4 beansprucht, in welchem das Reaktionsmittel das Chelat eines mehrwertigen Metalles mit Nitrilotriessigsäure ist.

10. Ein Verfahren wie in Anspruch 9 beansprucht, in welchem das Reaktionsmittel ein Koordinationskomplex von Eisen mit Nitrilotriessigsäure ist.

11. Ein Verfahren wie in irgendeinem der vorhergenenden Ansprüche beansprucht, in welchem die wäßrige Reaktionslösung zusätzlich ein für $CO_2$ selektiv wirkendes flüssiges Absorbtionsmittel enthält.

**Revendications**

1. Procédé d'élimination de $H_2S$ d'un courant gazeux corrosif, ce procédé comprenant les étapes suivantes:

a) mise ein contact du courant gazeux corrosif dans une zone de contact avec une solution réactionnelle aqueuse à une température inférieure au point de fusion du soufre, la solution contenant un réactif oxydant comprenant un ou plusieurs composés oxydants de type chélate de métal polyvalent et produisant un courant gazeux non corrosif et une solution réactionnelle aqueuse contenant du soufre cristallin et un ou des chélate(s) de métal polyvalent réduit;

b) régénération du ou des chélate(s) de métal polyvalent réduit, caractérisé en ce que la régénération est réalisée dans une cellule électrochimique comprenant une section anodique contenant une anode et une section cathodique séparée contenant une cathode reliée à l'anode, le section anodique et la section cathodique étant séparées par une barrière perméable aux ions hydrogène, la dite régénération étant réalisée en oxydant le ou les chélate(s) de métal polyvalent réduit du dit acide dans la solution réactionnelle aqueuse à l'anode en laissant migrer les ions hydrogène vers la section cathodique, et

b1) en utilisant une cathode reliée à l'anode par l'intermédiaire d'un branchement électrique externe, en alimentant la dite cellule en courant continu et en alimentant simultanément la cathode en oxygène et en formant de l'eau à la cathode, ou

b2) en utilisant une cathode reliée à l'anode par l'intermédiaire d'une charge externe, en produisant un courant continu à travers la dite charge et en alimentant simultanément la section cathodique en oxygène et en formant de l'eau à la cathode, ou

b3) en utilisant une cathode reliée à l'anode par l'intermédiaire d'un branchement électrique externe, en alimentant la dite cellule en courant continu et en produisant de l'hydrogène à la cathode, et

c) élimination du soufre de la solution réactionnelle aqueuse et, dans le cas de b1) et de b2), de l'eau et, dans le cas de b3) de l'hydrogène, de le section cathodique.

2. Procédé selon la revendication 1, dans lequel la dite zone de contact comprend la dite section anodique.

3. Procédé selon la revendication 1, dans lequel le mélange aqueux contenant le ou les chélate(s) de métal polyvalent réduit est soutiré de la zone de contact de l'étape (a), le mélange aqueux soutiré est régénéré électrolytiquement en faisant passer le mélange aqueux à travers la section anodique de la cellule électrochemique de l'étape (b) et le mélange aqueux régénéré est retiré de la section anodique et renvoyé vers la zone de contact.

4. Procédé selon la revendication 3, dans lequel le soufre est éliminé du mélange aqueux avant la régénération électrolytique de ce dernier.

5. Procédé selon l'une quelconque des revendications précédentes, dans lequel le reactif

oxydant comprend un ou plusieurs chélate(s) de métal polyvalent oxydant d'un acide de formule

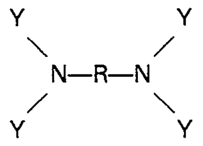

dans laquelle

— de deux à quatre des groupes Y représentent des groupes carboxyméthyle ou 2-carboxyéthyle;
— de zéro à deux des groupes Y représentent un groupe 2-hydroxyéthyle ou 2-hydroxypropyle ou un groupe de formule générale

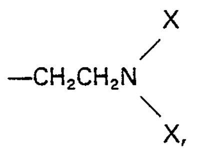

dans laquelle X représente un groupe carboxyméthyle ou 2-carboxyéthyle; et
— R représente un groupe éthylène, propylène, isopropylène, 1,2-cyclohexylène ou 1,2-benzylène.

6. Procédé selon la revendication 5, dans laquelle le réactif est un chélate de métal polyvalent d'un acide aminoacétique dérivé de l'éthylène-diamine.

7. Procédé selon l'une quelconque des revendications précédentes, dans lequel le métal polyvalent est le fer.

8. Procédé selon la revendication 7, dans lequel le réactif est un complexe de coordination du fer avec l'acide N - (2 - hydroxyéthyl)éthylène - diamine - triacétique.

9. Procédé selon l'une quelconque des revendications 1 à 4, dans lequel le réactif est un chélate de métal polyvalent de l'acide nitrilotriacétique.

10. Procédé selon la revendication 9, dans lequel le réactif est un complexe de coordination du fer avec l'acide nitrilotriacétique.

11. Procédé selon l'une quelconque des revendications précédentes, dans lequel la solution réactionnelle aqueuse contient aussi un liquide absorbant sélectif vis-à-vis de $CO_2$.

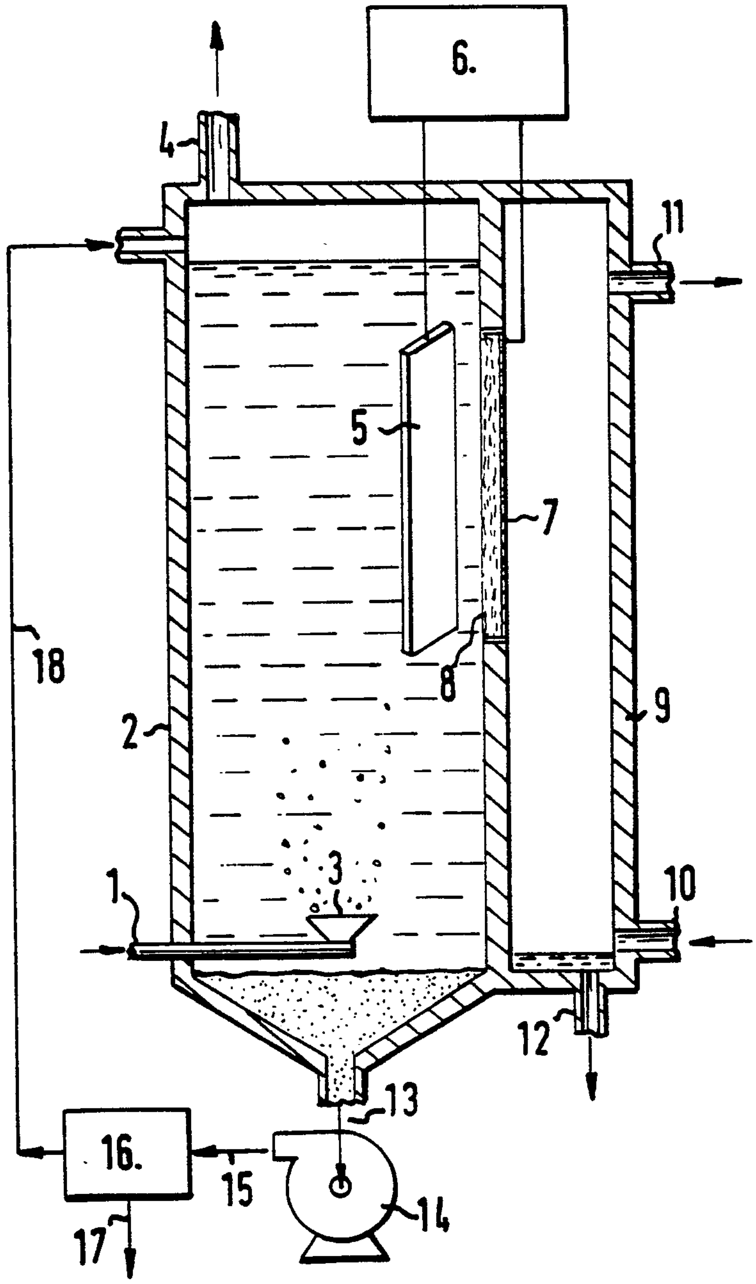


FIG.1

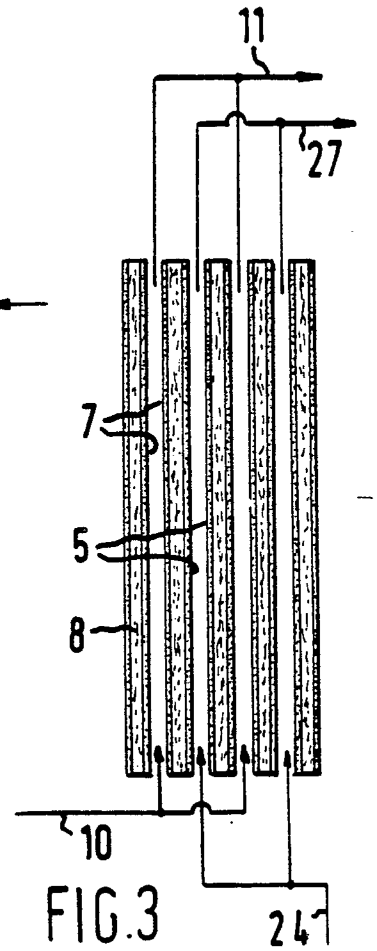


FIG.3

FIG. 2

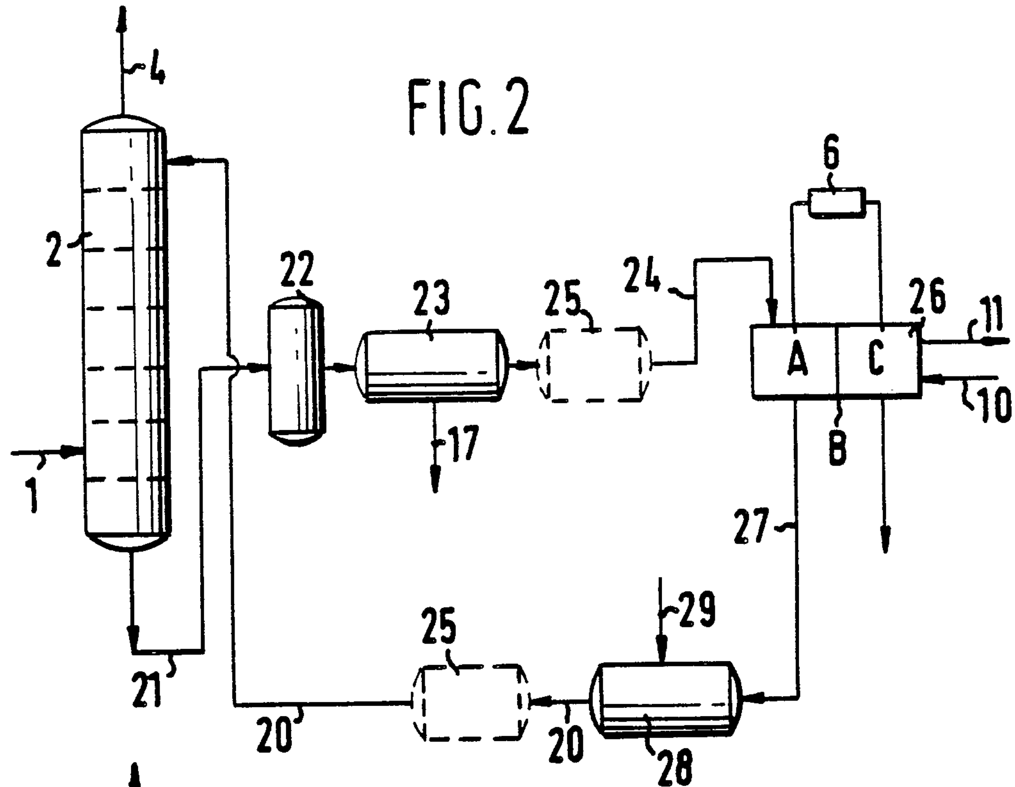
4
2
1
21
22
23
17
25
24
6
26
11
A
C
10
B
27
29
25
20
20
28

FIG. 5

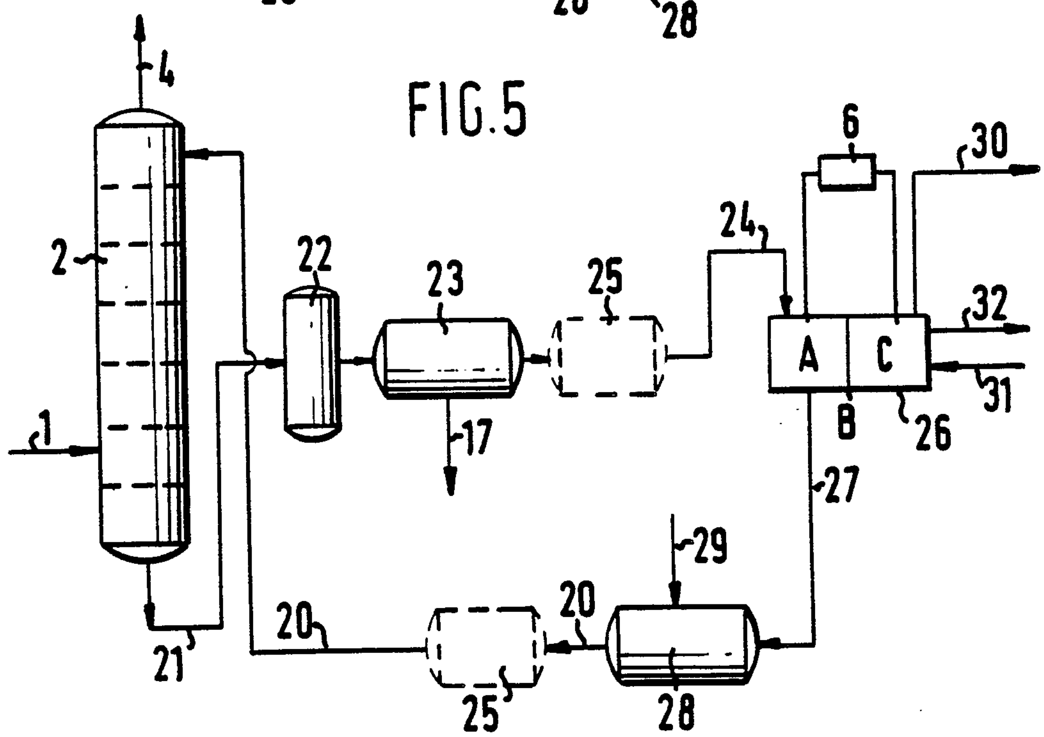
4
2
1
21
22
23
17
25
24
6
30
32
A
C
31
B
26
27
29
20
20
25
28

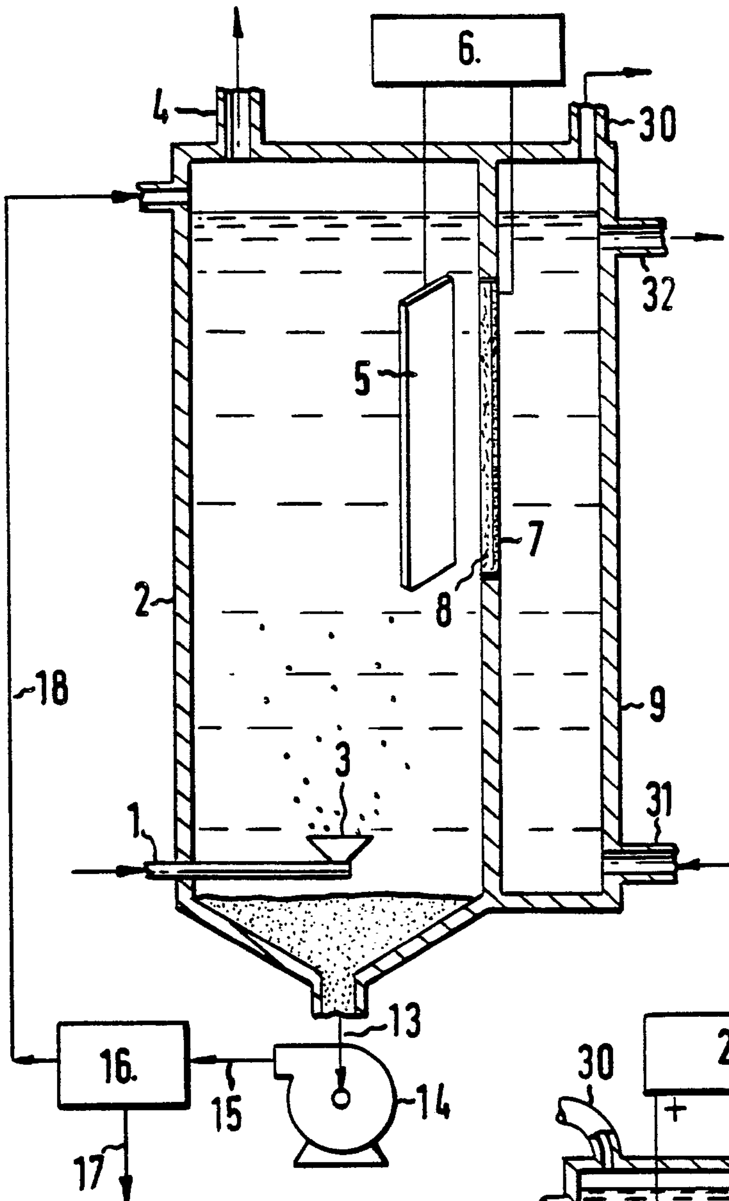


FIG.4

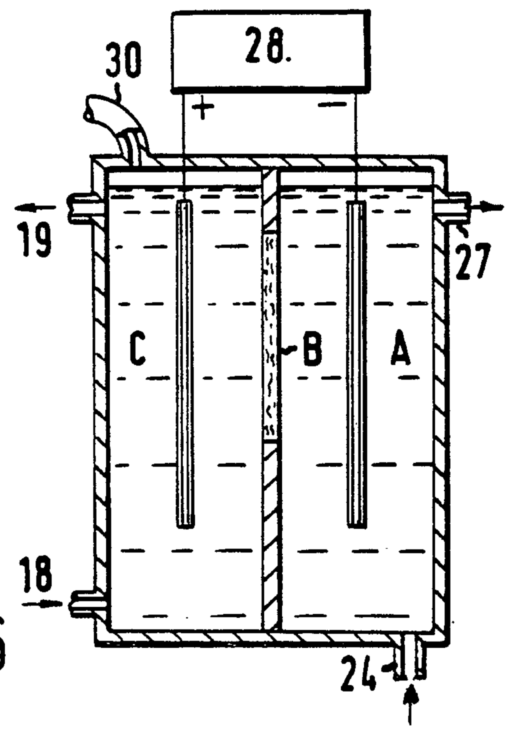


FIG.6